# EUROPÄISCHE PATENTANMELDUNG

(11) **EP 1 533 198 A1**
(43) Veröffentlichungstag der Anmeldung: **25.05.2005**
(21) Anmeldenummer: 04024272.9
(22) Anmeldetag: 12.10.2004
(51) Int. Cl.: B60R 21/20

(54) **Gassackmodul**

(30) Priorität: 21.11.2003 DE 10354560
(71) Anmelder: TRW Automotive GmbH, 73553 Alfdorf (DE)
(72) Erfinder: Joos, Jürgen, 89551 Königsbronn (DE); Lutz, Joachim, 73579 Schechingen (DE)
(74) Vertreter: Kitzhofer, Thomas, Dipl.-Ing.

(57) **Zusammenfassung**

Ein Gassackmodul hat ein Modulgehäuse (10) mit einer Aufnahme (14) zur Unterbringung eines darin angeordneten Gassacks (16), mit einer Rückwand sowie einer Gassackaustrittsseite, die der Rückwand gegenüberliegt, einen außerhalb des Modulgehäuses (10) liegenden Gasgenerator (42) und ein Gasleitungsrohr (30), das mit einem Einströmende (33) mit dem Gasgenerator (42) verbunden ist, sich durch die Rückwand in Richtung Gassackaustrittsseite erstreckt und an seinem freien Ende einen Ausströmbereich (34) aufweist.

## Beschreibung

Die Erfindung betrifft ein Gassackmodul.

Es ist bekannt, ein Gasleitungsrohr, auch Gaslanze genannt, einzusetzen, um bei einer Aktivierung des Gassackmoduls Gas zum Aufblasen des Gassacks in denselben zu leiten. Dieses Konzept ist bisher vor allem in Seitengassackmodulen, die entlang eines Dachrahmens eines Fahrzeugs angeordnet sind, verwirklicht. Der Vorteil der Verwendung eines Gasleitungsrohres liegt darin, daß der Gasgenerator nicht unmittelbar im Gassackmodul angeordnet sein muß, sondern entweder an anderer Stelle im Fahrzeug oder auch in unmittelbarer Nähe zum Gassackmodul, aber an einer für die Platzausnutzung günstigeren Stelle liegen kann. Das Gasleitungsrohr muß nicht nur mit dem Gasgenerator, sondern auch mit etwaigen Gasverteilungselementen fest und gasdicht verbunden sein. Dies erfolgt bisher meistens durch Schweißen, was allerdings mit einem hohen Arbeitsaufwand und damit hohen Kosten verbunden ist.

Die Erfindung löst die Aufgabe, ein preisgünstiges Gassackmodul zur Verfügung zu stellen, bei dem das zum Aufblasen des Gassacks verwendete Gas über ein Gasleitungsrohr in den Gassack eingeleitet wird.

Das erfindungsgemäße Gassackmodul hat ein Modulgehäuse mit einer Aufnahme zur Unterbringung eines darin angeordneten Gassacks, mit einer Rückwand sowie einer Gassackaustrittsseite, die der Rückwand gegenüberliegt, einen außerhalb, d.h. vollständig außerhalb des Modulgehäuses liegenden Gasgenerator und ein Gasleitungsrohr, das mit einem Einströmende mit dem Gasgenerator verbunden ist, sich durch die Rückwand in Richtung Gassackaustrittsseite erstreckt und nur an seinem freien Ende einen Ausströmbereich aufweist.

Eine einfache Befestigung eines Gasumlenkteils wird gemäß einer Ausführungsform dadurch geschaffen, daß das Gasleitungsrohr am Einströmende durch eine Öffnung in einem im Gassack angeordneten Gaslenkungsblech hindurchgesteckt wird und mit einem Flansch innenseitig gegen das Gaslenkungsblech drückt. Diese Verbindung ist sehr einfach, denn das Gasleitungsrohr wirkt wie eine Schraube, deren Kopf durch den Ausströmbereich gebildet ist. Die sich ergebende formschlüssige und kraftschlüssige Befestigung des Gasleitungsrohrs ist verglichen mit der im Stand der Technik angewandten Schweißverbindung sehr kostengünstig auszuführen. Die Verbindung wird dadurch gebildet, daß das Gasleitungsrohr unterhalb des Ausströmbereichs einen Flansch trägt (z.B. einen angeformten Flansch oder eine Beilagscheibe), der vorzugsweise einen größeren Durchmesser hat als der Ausströmbereich. Eine weitergehende Befestigung des Gasleitungsrohrs am Gaslenkungsblech ist nicht unbedingt erforderlich, wenn das Gasleitungsrohr fest am Gehäuse fixiert ist. Die notwendige Gasdichtigkeit ist ebenfalls gewährleistet, da das Gas das Gasleitungsrohr durch den Ausströmbereich oberhalb des Flansches verläßt und hierüber direkt auf das Gasleitungsblech geleitet wird.

Das Gaslenkungsblech ist bevorzugt zumindest abschnittsweise wannenförmig ausgebildet, wobei der Ausströmbereich innerhalb des wannenförmigen Abschnitts liegt. Die Wände des wannenförmigen Abschnitts halten das heiße Gas von den Wänden des Gassacks fern, während die nach oben offene Wannenform gewährleistet, daß das Gas über eine große Fläche in den Gassack abströmen kann. Das Gasleitungsrohr wird von der oberen offenen Seite der Wanne durch die im Boden der Wanne vorgesehene Öffnung hindurchgesteckt.

Die Tiefe der Wanne kann zu den Enden des Gaslenkungsblechs abnehmen, wobei sich hier Befestigungsmittel für das Gaslenkungsblech am Gehäuse vorsehen lassen. Auch durch diese Formgebung wird die Gasströmung so gelenkt, daß das heiße Gas möglichst wenig mit den Wänden des Gassacks in Berührung kommt. Das Gaslenkungsblech kann außerdem zugleich zur Fixierung des Gassacks am Gehäuse genutzt werden.

Um eine möglichst hohe Schubneutralität zu erreichen, weist der Ausströmbereich bevorzugt mehrere radiale Ausströmöffnungen auf, die so angeordnet sind, daß sich die Impulse der aus den einzelnen Ausströmöffnungen ausströmenden Teilgasströme gegenseitig aufheben und eine Schubneutralität gegeben ist. Eine Möglichkeit, dies einfach zu erreichen, ist, die Ausströmöffnungen am oberen Ende des Gasleitungsrohrs radial und im gleichen Winkelabstand anzuordnen. Es können z.B. vier oder fünf Ausströmöffnungen vorgesehen sein.

Der Gasgenerator ist bevorzugt auf der Unterseite der Aufnahme angeordnet, also auf der Außenseite des Gehäuses und nicht innerhalb des Gassacks, was die Flexibilität der Formgebung des Gassackmoduls erhöht.

Für ein möglichst kompakt bauendes Gassackmodul kann die Aufnahme eine langgestreckte Form haben und das Gaslenkungsblech versetzt von einer gedachten Mittellinie der Aufnahme angeordnet sein. Hierdurch läßt sich die Tiefe der Aufnahme auf der Seite von der gedachten Mittellinie, auf der das Gaslenkungsblech angeordnet ist, geringer halten als auf der anderen Seite von der gedachten Mittellinie. Der Gasgenerator kann dann unterhalb der flacheren Seite der Aufnahme angeordnet sein.

Zur schnellen Einleitung einer großen Gasmenge in den Abschnitt des Gassacks, der gefaltet auf der tieferen Seite der Aufnahme gelegen ist, ist bevorzugt ein Abschnitt einer Seitenwand des wannenförmigen Abschnitts, die zum Inneren der Aufnahme gerichtet ist, abgesenkt.

Vorzugsweise ist das Gasleitungsrohr fest mit dem Gasgenerator verbunden. Die Befestigung erfolgt z.B. darüber, daß das Gasleitungsrohr am Einströmende einen Einströmbereich aufweist und der Gasgenerator zylindrisch ist und eine durchgehende Öffnung senkecht zu einer Längsachse aufweist und das Gasleitungsrohr durch den Gasgenerator hindurchragt, wobei der Einströmbereich im Inneren des Gasgenerators liegt. Das Einströmende des Gasleitungsrohres, an dem der Einströmbereich ausgebildet ist, kann ebenfalls formschlüssig mit dem Gasgenerator verbunden oder z.B. an diesem verschraubt sein. Diese Befestigung erfolgt vorzugsweise dadurch, daß das Einströmende durch den Gasgenerator hindurchragt und in diesem Bereich eine Schrauben-Muttern-Verbindung ausgeführt ist, mittels der eine axiale Klemmkraft auf das Gaslenkungsblech und den Gasgenerator ausgeübt wird. Das bedeutet, die Teile zwischen dem Flansch am Gasleitungsrohr und der Schrauben-Muttern-Verbindung werden zueinander, wie bei einer Schraubverbindung, geklemmt und positioniert. Nicht nur der Gasgenerator und das Gaslenkungsblech, auch das Gehäuse und gegebenenfalls der Gasgenerator können hierdurch geklemmt werden.

Der in das Außengehäuse hineinragende Teil des Gasleitungsrohrs verläuft vorzugsweise linear und ist sowohl axial als auch radial zur Bildung eines Leerraums von dem zu einem Paket gefalteten Gassack beabstandet.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische perspektivische Ansicht eines erfindungsgemäßen Gassackmoduls, aus Gründen der Übersichtlichkeit ohne Gassack dargestellt, bei dem der Ausströmbereich des Gasleitungsrohres gemäß einer ersten Variante ausgebildet ist;
- Figur 2 das Gassackmodul aus Figur 1, wobei die Ausbildung des Ausströmbereichs des Gasleitungsrohrs variiert zu Figur 1 ist;
- Figur 3 eine perspektivische Ansicht eines erfindungsgemäßen Gassackmoduls von schräg oben gesehen;
- Figur 4 eine perspektivische Ansicht des erfindungsgemäßen Gassackmoduls aus Figur 3 von schräg unten;
- Figur 5 eine Schnittansicht eines erfindungsgemäßen Gassackmoduls entlang der Linie V-V in Figur 2;
- Figur 6 eine Schnittansicht entlang der Linie VI-VI in Figur 2;
- Figur 7 eine perspektivische Ansicht eines mit einem Gasleitungsrohr verbundenen Gasleitungsblechs zur Verwendung in einem erfindungsgemäßen Gassackmodul;
- Figur 8 eine schematische Seitenansicht der Baugruppe aus Figur 7;
- Figur 9 eine perspektivische Ansicht des Gasleitungsrohrs und des Gaslenkungsblechs nach Figur 7;
- Figur 10 eine schematische Seitenansicht eines Gassackmoduls gemäß einer weiteren Ausführungsform;
- Figur 11 eine perspektivische Ansicht auf das Gassackmodul von Figur 10;
- Figur 12 eine Seitenansicht von der Stirnseite des Gassackmoduls von Figur 10 und
- Figur 13 eine Seitenansicht des Gassackmoduls nach Figur 10 in aufgeblasenem Zustand des Gassacks.

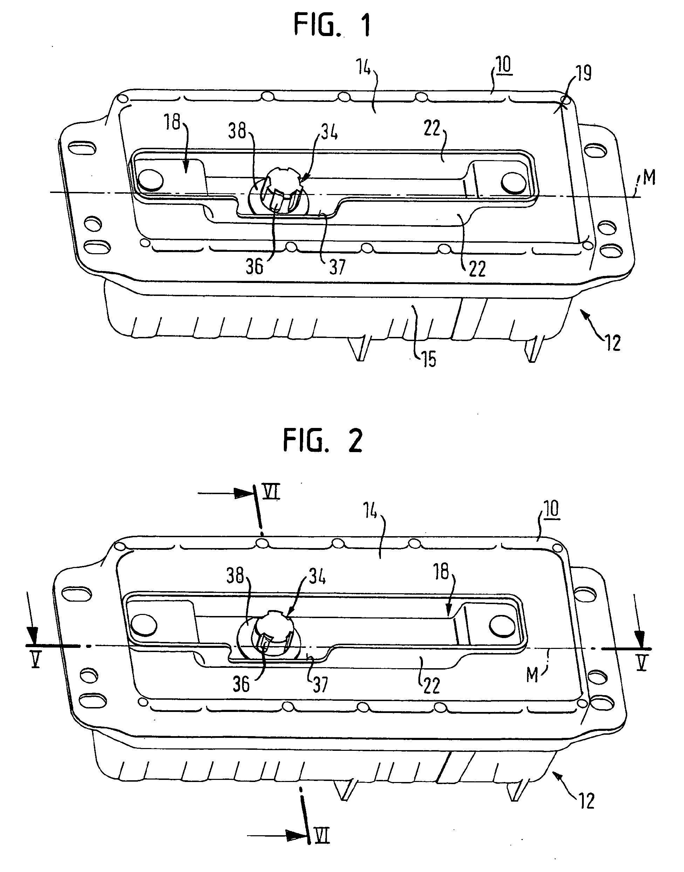

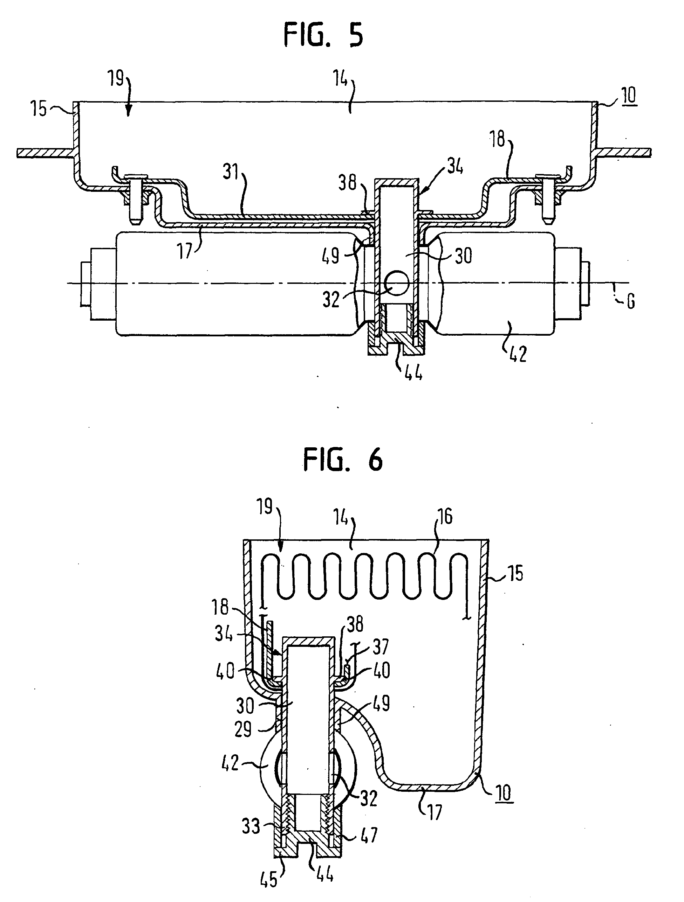

Das Modulgehäuse 10 (Außengehäuse) des in Figur 1 gezeigten Gassackmoduls 12 weist eine von Wänden des Gehäuses 10 begrenzte Aufnahme 14 auf, in der ein (schematisch in Figur 6 gezeigter) gefalteter Gassack 16 aufgenommen ist. Eine Seitenwand 15 geht von einer gestuften Rückwand 17 des Gehäuses 10 aus, die einer Gassackaustrittsseite 19 gegenüberliegt (siehe Figur 6).

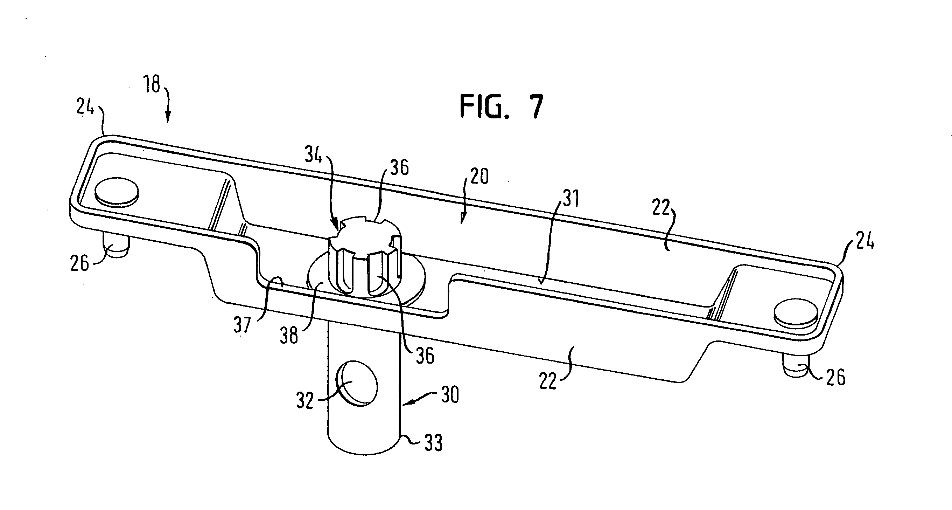

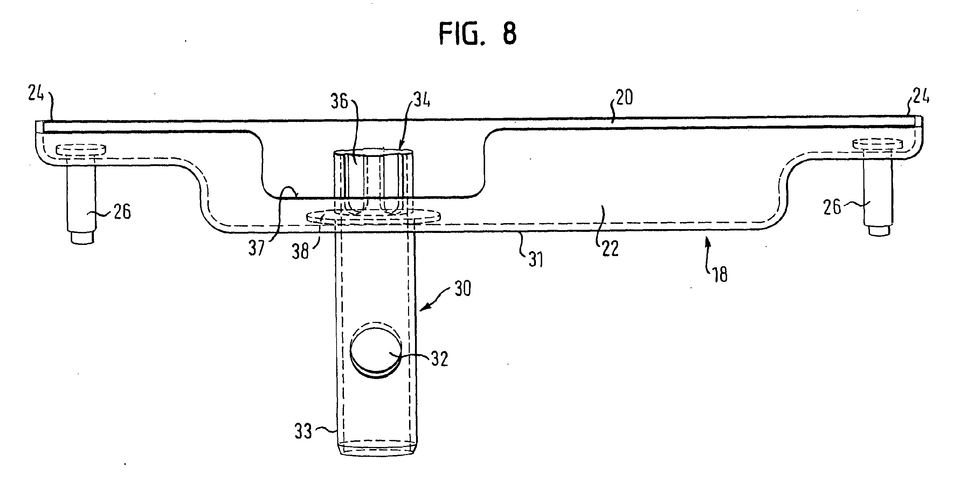

In der Aufnahme 14 und innerhalb des Gassacks 16 ist ein Gaslenkungsblech 18 angeordnet, und zwar versetzt von einer gedachten Mittellinie M der Aufnahme 14. Das Gaslenkungsblech 18 weist einen wannenförmigen inneren Abschnitt 20 auf (siehe z.B. Figuren 7 bis 9), dessen parallel zu den Wänden der Aufnahme 14 ausgerichtete Seitenwände 22 das zum Aufblasen des Gassacks 16 bestimmte Gas auf seinem Weg in den Gassack 16 lenken. Der wannenförmige Abschnitt, in den der Gassack 16 nicht hineinragt, bildet einen Diffusorraum für das einströmende Gas.

Das Gaslenkungsblech 18 ist an beiden Enden 24 abgeflacht und mit Befestigungselementen in Form von Befestigungsbolzen 26 versehen, über die es am Gehäuse 10 befestigt werden kann. Der Rand einer Einblasöffnung des Gassacks 16 kann großflächig zwischen dem Boden des Gehäuses 10 und dem Boden des wannenförmigen Abschnitts 20 des Gaslenkungsblechs 18 geklemmt sein. Zusätzlich läßt sich der Gassack 16 mit Öffnungen versehen, durch die die Befestigungsbolzen 26 ragen, um den Gassack sicher mit dem Gehäuse 10 zu verbinden.

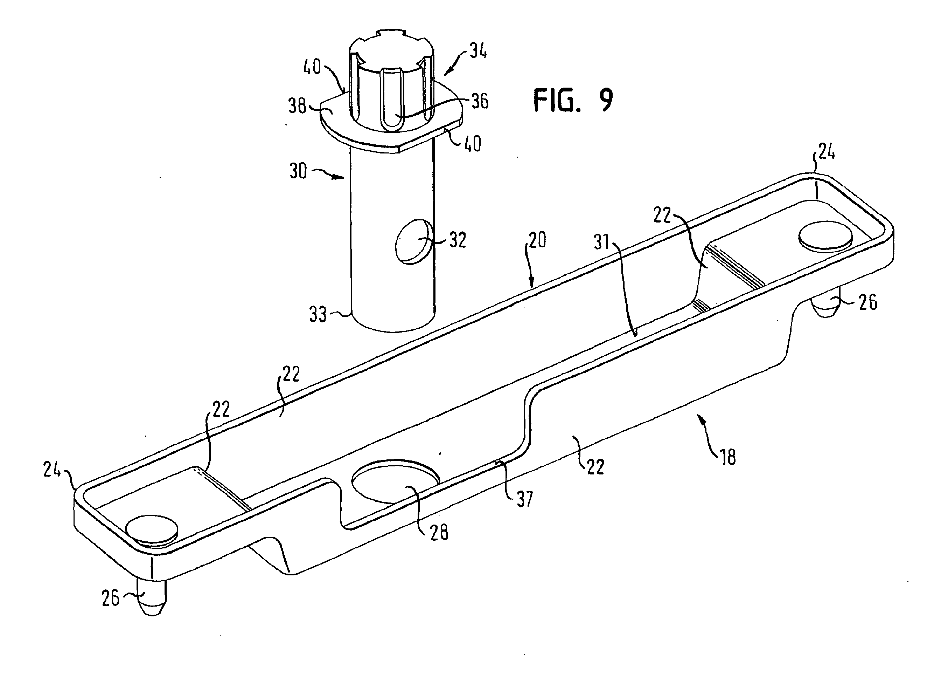

Der Boden des Gaslenkungsblechs 18 weist eine Öffnung 28 auf, die leicht von der Mitte des wannenförmigen Abschnitts 20 in Richtung eines der Enden 24 versetzt liegt (siehe Figur 9).

Durch diese Öffnung 28 und durch eine Öffnung 29 in der Rückwand 17 des Gehäuses 10 ragt ein Gasleitungsrohr 30 hindurch (siehe z.B. Figur 6). Das Gasleitungsrohr 30 erstreckt sich dabei im wesentlichen senkrecht zu einem flachen Boden 31 des wannenförmigen Abschnitts 20 (siehe z.B. Fign. 5 und 7) und wird mit seinem Einströmende 33 voraus durch das Gaslenkungsblech 18 hindurchgesteckt.

Das komplett linear verlaufende Gasleitungsrohr 30 hat an seinem Einströmende 33 zwei einen Einströmbereich 32 bildende Öffnungen, während es nur am entgegengesetzten Ende einen Ausströmbereich 34 besitzt, der mehrere radiale, in der Wand des Gasleitungsrohrs 30 angeordnete, in gleichen Winkelabständen verteilte Ausströmöffnungen 36 hat. Durch diese Anordnung erfolgt das Ausströmen des Gases aus dem Ausströmbereich 34 praktisch schubneutral, da sich die Impulse der einzelnen Gasströme gegenseitig aufheben. Es können z.B., wie in Figur 1 gezeigt, fünf Ausströmöffnungen 36 oder, wie in Figur 2 gezeigt, vier Ausströmöffnungen 36 vorgesehen sein. Auch eine andere Zahl von Ausströmöffnungen 36 als die hier beschriebenen sind selbstverständlich denkbar.

Direkt unterhalb der Ausströmöffnungen 36 trägt das Gasleitungsrohr einen ringförmigen Flansch 38, der das Gasleitungsrohr 30 umfangsmäßig vollständig umgibt und einen größeren Durchmesser als das Gasleitungsrohr 30 im Bereich der Ausströmöffnungen 36 und die Öffnung 28 besitzt.

Das Gasleitungsrohr 30 ist so weit durch die Öffnung 28 im Gaslenkungsblech 18 geschoben, daß der Flansch 38 auf dem Gaslenkungsblech 18 aufliegt und die Öffnung 28 vollständig umgibt. Im hier gezeigten Beispiel verläuft der Umfangsrand des Flansches 38 an zwei gegenüberliegenden Seiten 40 in einer geraden Linie, wodurch eine Verdrehsicherung des Gasleitungsrohrs 30 gegenüber dem Gaslenkungsblech 18 gebildet ist, indem die Seiten 40 des Flansches 38 in Kontakt mit den Seitenwänden 22 des Gaslenkungsblechs 18 sind (siehe z.B. auch Figur 6).

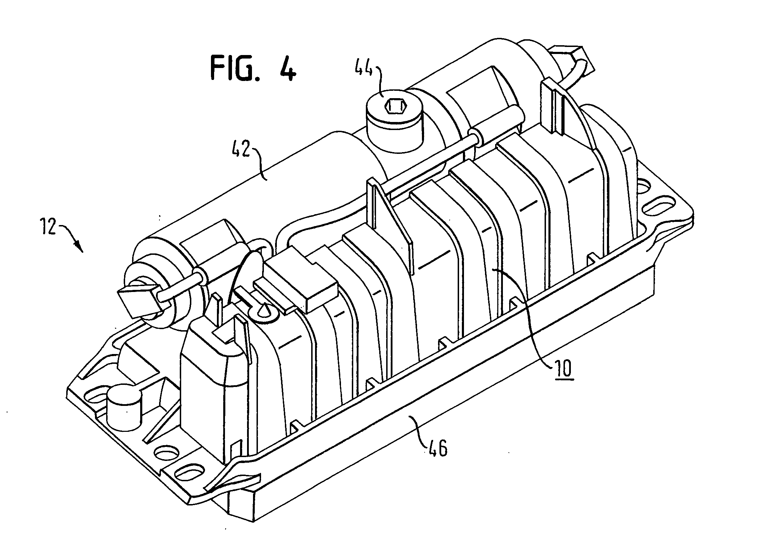

Ein Gasgenerator 42 ist außerhalb des Gehäuses 10 unterhalb der Aufnahme 14 angeordnet. Wie z.B. in den Figuren 4 und 6 zu sehen ist, liegt der Gasgenerator 42 direkt unterhalb des Gaslenkungsblechs, also ebenfalls versetzt von der gedachten Mittellinie M der Aufnahme 14.

Der Gasgenerator 42 hat eine zylindrische Gestalt und eine Längsachse G (siehe Figur 5). Senkrecht zu dieser Längsachse G weist er eine Durchgangsöffnung auf, durch die das Gasleitungsrohr 30 hindurchragt. Das Einströmende 33 steht sogar etwas aus dem Gasgenerator 42 heraus. Der Gasgenerator 42 hat (nicht gezeigte) Ausströmöffnungen, die mit dem innerhalb der Durchgangsöffnung angeordneten Einströmbereich 32 des Gasleitungsrohrs 30 in Strömungsverbindung stehen. Im hier gezeigten Beispiel sind im Einströmbereich 32 zwei einander gegenüberliegende Einströmöffnungen vorgesehen. Die exakte Ausführung des Einströmbereichs liegt natürlich im Ermessen des Fachmanns. Der Gasgenerator 42 verläuft mit seiner Längsachse G parallel zur Längserstreckung des länglichen Gehäuses, ohne in Draufsicht gegenüber ihm vorzustehen.

Das Gasleitungsrohr 30 ist stirnseitig am Einströmende 33 offen. Die Befestigung des Gasleitungsrohrs 30 am Gasgenerator 42 erfolgt über eine Verschlußkappe 44, die in das offene Ende des Gasleitungsrohrs 30 geschraubt ist. Die Verschlußkappe 44 hat einen radial abstehenden Rand 45 (siehe Figur 6), der gegen eine Hülse 47 drückt, welche außenseitig auf das Einströmende 33 aufgesteckt ist und gegen den Gasgenerator 42 drückt. Durch die Kappe 44 wird somit der Gasgenerator 42 gegen einen nach unten abstehenden rohrförmigen Fortsatz 49 am Gehäuse 10 gedrückt. Gleichzeitig wird auch der Flansch 38 nach unten gegen das Gaslenkungsblech 18 und dieses zusammen mit dem Gassack 16 gegen die Innenseite des Gaslenkungsblechs 18 gedrückt. Es ergibt sich somit eine Klemmverbindung aller zwischen dem Flansch 38 und der Schrauben-Muttem-Verbindung am Einströmende 33 vorgesehenen Teile. Natürlich können zusätzlich weitere Haltungselemente zur Befestigung des Gasgenerators 42 am Gehäuse 10 vorgesehen sein. Das Gasleitungsrohr 30 wirkt wie ein Zuganker, mittels dem der Gasgenerator 42 gegen die Außenseite der Rückwand 17 gepreßt wird.

Auf der Seite von der Mittellinie M, unterhalb derer der Gasgenerator 42 angeordnet ist, ist die Aufnahme 14 flacher ausgebildet als auf der anderen Seite von der Mittellinie M. Der Gassack 16 füllt die Aufnahme 14 vollständig aus.

Ein Abschnitt 37 der zum Inneren der Aufnahme 14 gerichteten Seitenwand 22 des Gaslenkungsblechs 18 ist abgesenkt, d.h. die Wandhöhe ist gegenüber dem Rest des wannenförmigen Abschnitts 20 reduziert.

Der abgesenkte Abschnitt 37 liegt im Bereich des Ausströmbereichs 34, was dazu führt, das eine große Gasmenge direkt in den Abschnitt des gefalteten Gassacks gelangt, der im tieferen Teil der Aufnahme 14 angeordnet ist.

Mit Ausnahme des abgesenkten Abschnitts 37 liegen die Ausströmöffnungen 36 jedoch unterhalb eines oberen Randes der Seitenwände 22, so daß das ausströmende Gas zunächst auf das Gaslenkungsblech 18 trifft, bevor es in den Gassack 16 gelangt.

Das Gasleitungsrohr 30 und das Gaslenkungsblech 18 sind bevorzugt nur über die Klemmung am Flansch 38 aneinander fixiert. Da das Gasleitungsrohr 30 über die Verschlußkappe 44 fest mit dem Gasgenerator 42 und damit fest mit dem Gehäuse 10 verbunden ist, sowie das Gaslenkungsblech 18 über die Befestigungsbolzen 26 am dem Gehäuse 10 fixiert ist, ist eine Relativbewegung des Gasleitungsrohrs 30 gegenüber dem Gaslenkungsblech 18 ausgeschlossen. Da der Flansch 38 unterhalb des Ausströmbereichs 34 liegt, so daß kein hoher Druck auf die Verbindung zwischen dem Flansch 38 und dem Gaslenkungsblech 18 wirkt, ist auch die Gasdichtigkeit ausreichend.

Beim Zusammenbau des Gassackmoduls 12 wird zunächst das Gasleitungsrohr in das Gasleitungsblech gesteckt und das Gasleitungsblech in den Gassack 16 eingelegt. Dann wird das Gasleitungsrohr durch die Öffnung 29 im Gehäuse 10 und der Einströmbereich durch die Durchgangsöffnung des Gasgenerators 42 gesteckt, die Hülse 47 aufgeschoben und Verschlußkappe 44 eingeschraubt.

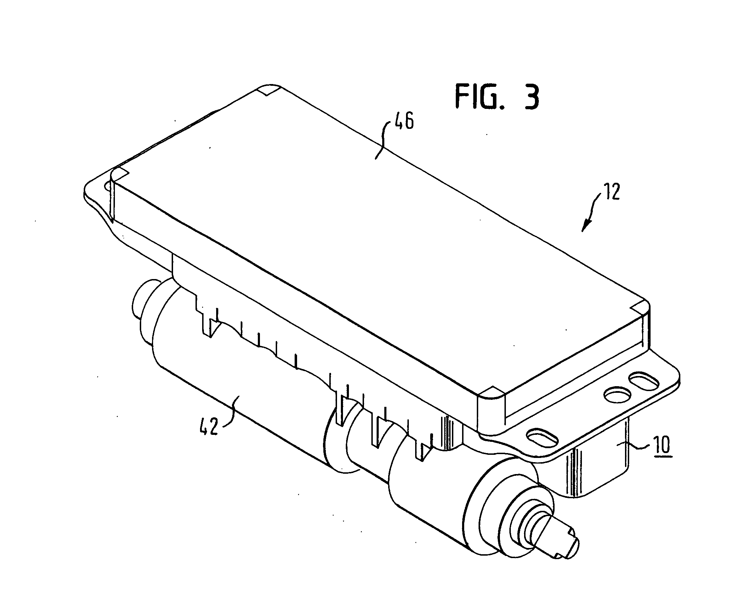

In den Figuren 3 und 4 ist die Aufnahme 14 durch eine Schutzhülle 46 verschlossen, die sich bei der Aktivierung des Gassackmoduls 12 öffnet.

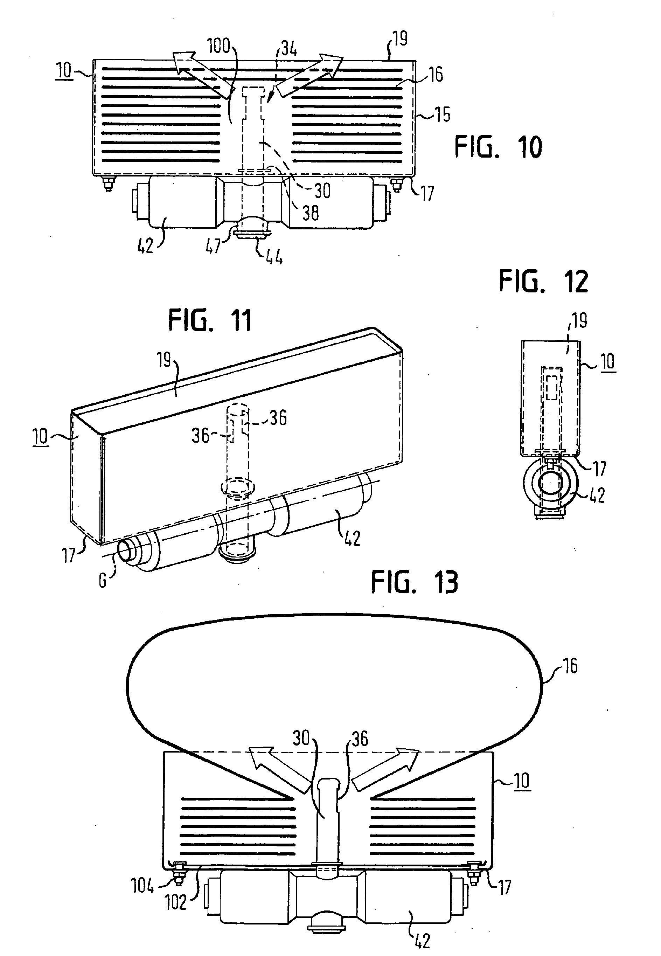

Bei der Ausführungsform nach den Figuren 10 - 13 werden die bereits eingeführten Bezugszeichen für funktionsgleiche Teile erneut verwendet. Ihre Funktion ergibt sich aus der vorstehenden Beschreibung zum ersten Ausführungsbeispiel.

Auch bei der Ausführungsform nach den Figuren 10 - 13 wirkt das lineare Gasleitungsrohr 30 wie ein Zuganker und drückt den Gasgenerator 42 gegen die Außenseite der Rückwand 17. Auch hier ist das Modulgehäuse 10, insbesondere wie in Figur 11 zu sehen ist, in Draufsicht langgestreckt ausgeführt. Der Gasgenerator 42 ist parallel zur Längsrichtung der Rückwand 17 ausgerichtet und steht, wie Figur 12 zu entnehmen ist, in Draufsicht seitlich nicht gegenüber der Rückwand 17 vor, so daß das Modul eine kompakte Einheit ist.

Bei dieser Ausführungsform ist das Gaslenkungsblech 18 nicht vorhanden. Der Flansch 38 drückt von oben gegen die Rückwand 17. Auch bei dieser Ausführungsform erstreckt sich das Gasleitungsrohr 30 von der Rückwand 17 linear zur Gassackaustrittsseite 19 sowie rechtwinklig zur Gassackaustrittsseite und in Hauptaustrittsrichtung des Gassacks. An seinem im Modulgehäuse 10 vorgesehenen Ende sind im entsprechenden Ausströmbereich 34 zwei um 180° versetzte Ausströmöffnungen 36 vorgesehen (siehe Figur 11), die zu den entgegengesetzten Stirnseiten des Außengehäuses 10 zeigen und damit in Längsrichtung ausgerichtet sind.

Das Gasleitungsrohr 30 erstreckt sich mitten in das Paket, zu dem der Gassack 16 gefaltet ist. Um das Gasleitungsrohr 30 herum ist das Gassackpaket jedoch von diesem sowohl in axialer als auch in radialer Richtung beabstandet, so daß ein Gasverteilraum 100 gebildet wird. Da die Ausströmöffnungen 36 am oberen Ende des Gasleitungsrohrs 30 liegen und sich dieses bis fast zur Gassackaustrittsseite 19 erstreckt, so daß nur ganz wenige Lagen des Gassacks 16 über ihm verbleiben, strömt das vom Gasgenerator 42 erzeugte Gas im oberen Luftsackpaketbereich in diesen ein. Der Gassack 16 wird also nahe der Gassackaustrittsseite 19 mit dem Gasstrahl, der durch Pfeile gekennzeichnet ist, beaufschlagt. Damit wird eine hohe Reibung aufeinanderliegender Gassackabschnitte vermieden. Der Gassack 16 entfaltet sich, wie gewünscht, von nahe der Gassackaustrittsseite 19 aus, wie in Figur 13 zu sehen ist. Durch die seitliche Gaseinströmung aufgrund der um 180° gegenüberliegenden Ausströmöffnungen 36 kann ein schnelles Entfalten in die Breite stattfinden, das positiv für die Rückhaltung des Insassen ist. Die Gassackentfaltung beginnt mit einem Teilvolumen, und das weiter unten eingefaltete Restvolumen des Gassackpakets wird nachgezogen.

Der Gassack 16 selbst wird übrigens durch ein einfaches Befestigungsblech 102 (siehe Figur 13) und zwei Einpreßschrauben 104 an der Rückwand 17 geklemmt.

Das Gasleitungsrohr 30 hat in allen Ausführungsformen einen kreiszylindrischen Querschnitt.

## Patentansprüche

1. Gassackmodul mit
einem Modulgehäuse (10) mit einer Aufnahme (14) zur Unterbringung eines darin angeordneten Gassacks (16), mit einer Rückwand (17) sowie einer Gassackaustrittsseite (19), die der Rückwand (17) gegenüberliegt,
einem außerhalb des Modulgehäuses (10) liegenden Gasgenerator (42) und
einem Gasleitungsrohr (30), das mit einem Einströmende (33) mit dem Gasgenerator (42) verbunden ist, sich durch die Rückwand (17) in Richtung Gassackaustrittsseite (19) erstreckt und an seinem freien Ende einen Ausströmbereich (34) aufweist.

2. Gassackmodul nach Anspruch 1, **dadurch gekennzeichnet, daß** das Gasleitungsrohr (30) unterhalb des Ausströmbereichs (34) einen scheibenförmigen Flansch (38) trägt, der einen größeren Durchmesser hat als der sich anschließende Ausströmbereich (34).

3. Gassackmodul nach Anspruch 1 oder 2, **dadurch gekennzeichnet, daß** ein vorzugsweise im Gassack (16) angeordnetes Gaslenkungsblech (18) vorgesehen ist, wobei das Gasleitungsrohr (30) am Einströmende (33) durch eine Öffnung (28) im Gaslenkungsblech (18) hindurchgesteckt ist, und daß ein Flansch (38) innenseitig gegen das Gaslenkungsblech (18) drückt.

4. Gassackmodul nach einem der vorhergehenden Ansprüche, **dadurch gekennzeichnet, daß** das Gaslenkungsblech (18) zumindest abschnittsweise wannenförmig ausgebildet ist und daß der Ausströmbereich (34) innerhalb des wannenförmigen Abschnitts (20) liegt.

5. Gassackmodul nach Anspruch 4, **dadurch gekennzeichnet, daß** die Tiefe der Wanne zu den Enden (24) des Gaslenkungsblechs (18) abnimmt.

6. Gassackmodul nach Anspruch 4 oder 5, **dadurch gekennzeichnet, daß** das wannenförmige Gaslenkungsblech (18) eine offene Seite hat, die dem mit der Öffnung (28) versehenen Boden des Gaslenkungsblechs (18) gegenüberliegt.

7. Gassackmodul nach einem der vorhergehenden Ansprüche, **dadurch gekennzeichnet, daß** am Gaslenkungsblech (18) Befestigungselemente angreifen, die das Gaslenkungsblech (18) mit dem Gehäuse (10) verbinden.

8. Gassackmodul nach einem der vorhergehenden Ansprüche, **dadurch gekennzeichnet, daß** der Ausströmbereich (34) mehrere radiale Ausströmöffnungen (36) aufweist, die so angeordnet sind, daß das Gasleitungsrohr (30) schubneutral ist.

9. Gassackmodul nach einem der vorhergehenden Ansprüche, **dadurch gekennzeichnet, daß** der Gasgenerator (42) auf einer Unterseite der Aufnahme (14) angeordnet ist.

10. Gassackmodul nach einem der vorhergehenden Ansprüche, **dadurch gekennzeichnet, daß** die Aufnahme (14) eine langgestreckte Form hat und das Gaslenkungsblech (18) versetzt zu einer gedachten Mittellinie (M) der Aufnahme (14) angeordnet ist.

11. Gassackmodul nach Anspruch 10, **dadurch gekennzeichnet, daß** die Tiefe der Aufnahme (14) auf der Seite der gedachten Mittellinie (M), auf der das Gaslenkungsblech (18) angeordnet ist, geringer ist als auf der anderen Seite der gedachten Mittellinie (M).

12. Gassackmodul nach Anspruche 10 oder 11, **dadurch gekennzeichnet, daß** ein Abschnitt (37) einer Seitenwand (22) des Gehäuses (10), die zum Inneren der Aufnahme (14) gerichtet ist, abgesenkt ist.

13. Gassackmodul nach einem der vorhergehenden Ansprüche, **dadurch gekennzeichnet, daß** das Gasleitungsrohr (30) am Einströmende einen Einströmbereich (32) aufweist und das Einströmende teilweise durch den Gasgenerator (42) hindurchragt.

14. Gassackmodul nach einem der vorhergehenden Ansprüche **dadurch gekennzeichnet, daß** der aus dem Gasgenerator (42) herausragende Abschnitt des Einströmendes (33) Teil einer Schrauben-Muttern-Verbindung ist, mittels der eine axiale Klemmkraft auf das Gaslenkungsblech (18) und den Gasgenerator (42) ausgeübt wird.

15. Gassackmodul nach Anspruch 14, **dadurch gekennzeichnet, daß** durch die Schrauben-Muttern-Verbindung das Gaslenkungsblech (18), das Gehäuse (10) und der Gasgenerator (42) in axialer Richtung geklemmt sind.

16. Gassackmodul nach einem der vorhergehenden Ansprüche, **dadurch gekennzeichnet, daß** der Gasgenerator (42) zylindrisch ist und eine durchgehende Öffnung senkrecht zu seiner Längsachse (G) aufweist.

17. Gassackmodul nach einem der vorhergehenden Ansprüche, **dadurch gekennzeichnet, daß** die Rückwand und der Gasgenerator (42) langgestreckt und parallel zueinander ausgerichtet sind.

18. Gassackmodul nach einem der vorhergehenden Ansprüche, **dadurch gekennzeichnet, daß** zumindest der in das Außengehäuse (10) hineinragende Teil des Gasleitungsrohrs (30) geradlinig verläuft und einen vorzugsweise kreiszylindrischen Querschnitt hat.

19. Gassackmodul nach einem der vorhergehenden Ansprüche, **dadurch gekennzeichnet, daß** der in das Außengehäuse (10) hineinragende Teil des Gasleitungsrohrs (30) sowohl axial als auch radial zur Bildung eines Leerraums (100) von dem zu einem Paket gefalteten Gassack (16) beabstandet ist.

20. Gassackmodul nach einem der vorhergehenden Ansprüche, **dadurch gekennzeichnet, daß** durch das Gasleitungsrohr (30) der Gasgenerator (42) am Gehäuse (10) befestigt ist.
